(19) Europäisches Patentamt
European Patent Office
Office européen des brevets

(11) Veröffentlichungsnummer : **0 554 220 A1**

(12) # EUROPÄISCHE PATENTANMELDUNG

(21) Anmeldenummer : **93810037.7**

(22) Anmeldetag : **20.01.93**

(51) Int. Cl.[5] : **C07F 17/02,** C08K 5/00, C08J 5/18, H01B 1/12, H01J 1/05

(30) Priorität : **29.01.92 CH 243/92**

(43) Veröffentlichungstag der Anmeldung : **04.08.93 Patentblatt 93/31**

(84) Benannte Vertragsstaaten : **AT BE CH DE ES FR GB IE IT LI NL PT SE**

(71) Anmelder : **CIBA-GEIGY AG**
**Klybeckstrasse 141**
**CH-4002 Basel (CH)**

(72) Erfinder : **Chetcuti, Peter, Dr.**
**Münchensteinerstrasse 8**
**CH-4052 Basel (CH)**

(54) **Charge-Transfer Komplexe mit Ferrocenen, deren Herstellung und deren Verwendung.**

(57) Charge-Transfer Komplexe der Formel I

$$[A]_{2}^{\ominus} \cdot B^{\oplus} \quad \text{(I)},$$

worin

a) A eine Verbindung der Formel II oder eine Mischung von Verbindungen der Formel II ist,

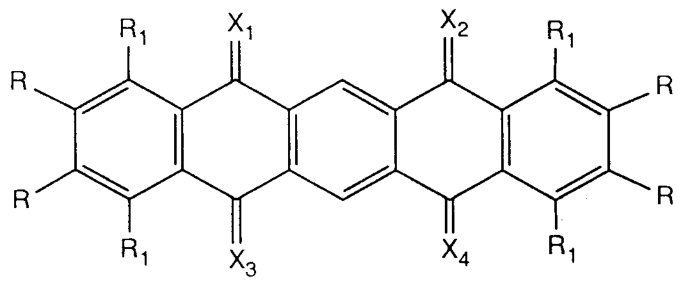

(II),

worin die R gleich sind und für H oder $C_1$-$C_4$-Alkyl stehen, oder die benachbarten R zusammen $-(CH_2)_3-$ oder $-(CH_2)_4-$ darstellen ; $R_1$ H oder $C_1$-$C_4$-Alkyl bedeutet ; und $X_1$ =N-CN darstellt und $X_2$, $X_3$ und $X_4$ =O oder =N-CN bedeuten, und

b) B ein Ferrocen- oder Indenylderivat ist, dessen Reduktionspotential $E_{\frac{1}{2}} < 0,41$ V ist, bezogen auf die Standardkalomelelektrode.

Die Komplexe sind elektrische Leiter, mit denen Kunststoffe antistatisch ausgerüstet oder in elektrische Leiter übergeführt werden können.



Jouve, 18, rue Saint-Denis, 75001 PARIS

Die Erfindung betrifft Charge-Transfer Komplexe (nachfolgend als CT-Komplexe abgekürzt) aus Pentacencyanoiminderivaten als Elektronenakzeptoren und Ferrocenderivaten als Elektronendonatoren; ein Verfahren zu deren Herstellung; Zusammensetzungen aus einem Kunststoff und einem solchen CT-Komplex; und die Verwendung der CT-Komplexe als elektrische Leiter, zum Beispiel zur Herstellung von elektrisch leitenden Filmen, Folien oder Beschichtungen. Bei diesen CT-Komplexe handelt es sich um Radikalkationensalze.

In Synthetic Metals, 41 -43, Seiten 2365 bis 2375 (1991) werden pulverförmige CT-Komplexe aus Tetracyanoiminpentacen und Tetrathiofulvalen als Elektronendonator beschrieben, die eine elektrische Leitfähigkeit von etwa 6 S/cm aufweisen.

Ferner wird 5,7,12,14-Tetracyanoimin-Pentacen von L. Miller et al. in Chem. Mater. 2, Seiten 339-40 (1990) als Elektronenakzeptor zur Herstellung von Radikalkationensalzen mit Alkalimetallen wie zum Beispiel Natrium und Kalium beschrieben.

Im US Patent 5,009,812 werden antistatisch ausgerüstete und elektrisch leitfähige Polymere beschrieben, die zum Beispiel CT-Komplexe aus Tetrathio-, Tetraseleno- oder Tetratellurotetracenen als Elektronendonatoren und Halogenen oder Sauerstoff als Elektronenakzeptoren enthalten. Die CT-Komplexe bilden in diesen Materialien Nadelnetzwerke in der Polymermatrix. Bei der Herstellung dieser elektrisch leitenden Polymeren müssen auf metallische Maschinenteile korrosiv wirkende Reaganzien verwendet werden, was besondere Schutzmassnahmen für die Maschinen erforderlich macht. Auf Grund der Schwerlöslichkeit chalkogenierter Tetracene müssen zudem bei der Herstellung relativ hohe Temperaturen eingestellt werden, was als unwirtschaftlich empfunden wird und wegen einer zu hohen Flüchtigkeit verwendeter Reaganzien auch arbeitshygienische Massnahmen erfordert. Auch die Verwendung von Tetraseleno- und Tetratellurotetracenen wird aus toxikologischen Gründen als bedenklich angesehen.

Es wurde nun gefunden, dass Pentacencyanoimine und bestimmte Ferrocenderivate überraschend CT-Komplexe bilden, die unerwartet selbst in Gegenwart von Bindemitteln nadelförmig kristallisieren, eine hohe elektrische Leitfähigkeit aufweisen und praktisch keine korrosive Wirkung auf metallische Teile von Verarbeitungsmaschinen zeigen. Die Ausgangsverbindungen sind auch in weniger polaren organischen Lösungsmitteln löslich, so dass zur Herstellung der CT-Komplexe keine sehr hohen Temperaturen angewendet werden müssen. Die CT-Komplexe weisen eine hohe Stabilität gegenüber Feuchtigkeit und Wärme auf.

Ein Gegenstand der Erfindung sind CT-Komplexe der Formel I

$$[A]_2^{\ominus\cdot}B^{\oplus} \quad \text{(I)},$$

worin

a) A eine Verbindung der Formel II oder eine Mischung von Verbindungen der Formel II ist,

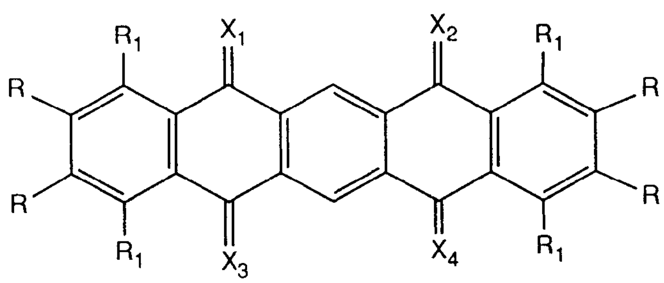

(II),

worin die R gleich sind und für H oder $C_1$-$C_4$-Alkyl stehen, oder die benachbarten R zusammen $-(CH_2)_3-$ oder $-(CH_2)_4-$ darstellen; $R_1$ H oder $C_1$-$C_4$-Alkyl bedeutet; und $X_1$ =N-CN darstellt und $X_2$, $X_3$ und $X_4$ =O oder =N-CN bedeuten, und

b) B ein Ferrocen- oder Indenylderivat ist, dessen Reduktionspotential $E_{1/2}$ < 0,41 V ist, bezogen auf die Standardkalomelelektrode.

Bei R und $R_1$ in der Bedeutung von Alkyl kann es sich um Methyl, Ethyl, n- oder i-Propyl oder n-, i- oder t-Butyl handeln. Bevorzugte Alkylreste sind Methyl und Ethyl. In einer bevorzugten Ausführungsform stellen die R $C_1$-$C_4$-Alkyl und die $R_1$ H dar, oder stellen die $R_1$ $C_1$-$C_4$-Alkyl und die R H dar. Bevorzugt stellen R und $R_1$ H, Methyl oder Ethyl dar. In einer besonders bevorzugten Ausführungsform bedeuten R und $R_1$ H.

In einer anderen bevorzugten Ausführungsform bedeuten $X_1$ und $X_4$ =N-CN und $X_2$ und $X_3$ =O oder =N-CN, oder $X_2$ und $X_3$ =N-CN und $X_1$ und $X_4$ =O oder =N-CN. Besonders bevorzugt stellen $X_1$, $X_2$, $X_3$ und $X_4$ =N-CN dar.

Das Ferrocenylderivat und das Indenylderivat weisen bevorzugt ein Reduktionspotential von kleiner oder gleich 0,32 V auf.

Bei B in Formel I kann es sich zum Beispiel um $Fe[R_2]_2$ handeln, worin $R_2$ für Cyclopentadienyl oder Indenyl steht, die 1 bis 5 beziehungsweise 1 bis 7 Substituenten aus der Gruppe $C_1$-$C_6$-Alkyl, $C_1$-$C_6$-Alkoxy, $C_1$-$C_6$-Hydroxyalkyl, -Amino-$C_1$-$C_6$-alkyl, Primär-oder Sekundäramino-$C_1$-$C_6$-alkyl mit 1 bis 12 C-Atomen in der Primäraminogruppe und 2 bis 12 C-Atomen in der Sekundäraminogruppe, $NH_2$, Primäramino mit 1 bis 12 C-Atomen, oder Sekundäramino mit 2 bis 12 C-Atomen enthalten.

Das Alkyl kann linear oder verzweigt sein und es enthält bevorzugt 1 bis 4 C-Atome. Beispiele sind Methyl, Ethyl, n- oder i-Propyl, n-, i- oder t-Butyl, Pentyl und Hexyl. Bevorzugt sind Ethyl und besonders Methyl.

Das Alkoxy kann linear oder verzweigt sein und es enthält bevorzugt 1 bis 4 C-Atome. Beispiele sind Methoxy, Ethoxy, n- oder i-Propoxy, n-, i- oder t-Butoxy, Pentoxy und Hexoxy. Bevorzugt sind Ethoxy und besonders Methoxy.

Das Hydroxyalkyl kann linear oder verzweigt sein und es enthält bevorzugt 1 bis 4 C-Atome. Beispiele sind Hydroymethyl, Hydroxyethyl, n- oder i-Hydroxypropyl, n-, i- oder t-Hydroxybutyl, Hydroxypentyl und Hydroxyhexyl. Bevorzugt sind Hydroxyethyl und besonders Hydroxymethyl.

Das Aminoalkyl kann linear oder verzweigt sein und es enthält bevorzugt 1 bis 4 C-Atome. Beispiele sind Aminomethyl, Aminoethyl, n- oder i-Aminopropyl, n-, i- oder t-Aminobutyl, Aminopentyl und Aminohexyl. Bevorzugt sind Aminoethyl und besonders Aminomethyl.

Das Primär- und Sekundäraminoalkyl kann linear oder verzweigt sein und es enthält bevorzugt 1 bis 4 C-Atome. Die Primäraminogruppe enthält bevorzugt eine $C_1$-$C_6$-Alkyl-gruppe, besonders bevorzugt eine $C_1$-$C_4$-Alkylgruppe und die Sekundäraminogruppe enthält bevorzugt zwei $C_1$-$C_6$-Alkylgruppen, besonders bevorzugt eine $C_1$-$C_4$-Alkylgruppe; besonders bevorzugte Alkylgruppen sind Methyl und Ethyl. Beispiele sind Methylaminomethyl, Dimethylamino-methyl, Diethylamino-methyl, Methylamino-ethyl, Dimethylamino-ethyl, oder Diethylamino-propyl, Dimethylamino-butyl, Diethylamino-pentyl und Dimethylamino-hexyl. Bevorzugt sind Methylamino-ethyl, Dimethylamino-methyl, Ethylamino -ethyl, Diethylamino-ethyl, Methylamino-methyl, Dimethylaminom-ethyl, Ethylamino-methyl und Diethylamino-methyl.

Das Primäramino enthält bevorzugt 1 bis 6 C-Atome und das Sekundäramino enthält bevorzugt 2 bis 6 C-Atome. Vorzugsweise enthält das Primär- und das Sekundäramino $C_1$-$C_4$-Alkyl, zum Beispiel Methyl, Ethyl, n- oder i-Propyl oder n-, i- oder t-Butyl. Einige Beispiele sind Methylamino, Dimethylamino, Ethylamino, Diethylamino, n- und i-Propylamino, Di-n- und Di-i-propylamino, n-, i- und t-Butylamino, Di-n- und Di-i-butylamino.

In einer bevorzugten Ausführungsform sind das Cyclopentadienyl und Indenyl mit $C_1$-$C_4$-Alkyl substituiert, besonders bevorzugt mit Methyl. In einer besonders bevorzugten Ausführungsform handelt es sich bei A in Formel I um 5,7, 12, 14-Tetracyanoiminpentacen und bei B in Formel I um Ferrocen, dessen Cyclopentadienylgruppen mit 1 bis 5 $C_1$-$C_4$-Alkylgruppen substituiert sind.

Das Cyclopentadienyl enthält bevorzugt mindestens 2 und besonders bevorzugt mindestens 3 Substituenten. Das Indenyl enthält bevorzugt 1 bis 7 und besonders bevorzugt 1 bis 5 Substituenten.

Einige Beispiele für B in Formel I sind Dimethyl-, Tetramethyl-, Hexamethyl-, Octamethyl- und Decamethylferrocen. Die Verbindung der Formel II ist bevorzugt 5,7,12,14-Tetracyanoiminpentacen, das in reiner Form vorliegt, oder bis zu 10 Gew-%, bezogen auf die Gesamtmischung, Verbindungen der Formel II enthält, in denen ein oder zwei Cyanoimingruppen durch Sauerstoff ersetzt sind. Besonders bevorzugte CT-Komplexe der Formel I sind solche aus 5,7, 12, 14-Tetracyanoiminpentacen und Dimethyl-, Tetramethyl-, Hexamethyl-, Octamethyl- und Decamethylferrocen.

Ein anderer Gegenstand der Erfindung ist ein Verfahren zur Herstellung von CT-Komplexen der Formel I, das dadurch gekennzeichnet ist, dass man äquimolare Mengen eines Ferrocenderivates B und eines Pentacencyanoimins der Formel II in einem inerten organischen Lösungsmittel umsetzt. Äquimolare Mengen bedeutet, dass man zur Bildung der 2:1-Komplexe etwa 1 Äquivalent des Ferrocenderivats B mit etwa 2 Äquivalenten des Pentacencyanoimins der Formel II umsetzt.

Die Ferrocenderivate sind bekannt, teilweise käuflich oder sie können nach allgemein bekannten Verfahren hergestellt werden. Die Herstellung von 5,7,12, 14-Tetracyanoiminpentacen ist von L. L. Miller in Synthetic Metals, 41-43, Seiten 2365-2375 (1991) beschrieben. Die als Ausgangsverbindungen verwendeten unsubstituierten oder substituierten 5,7,12,14-Pentacentetrone sind nach einem von W. H. Mills et al. in J. Chem. Soc. 101, Seite 2194 (1912) beschriebenen Verfahren erhältlich. Die 5,7,12,14-Tetracyanoiminpentacene können nach üblichen Methoden gereinigt werden, zum Beispiel durch Umkristallisation oder chromatographische Verfahren. Wenn keine besonderen Schutzmassnahmen ergriffen werden, wie zum Beispiel wasserfreie Bedingungen, können Cyanoimingruppen durch Sauerstoff ersetzt werden, was aber die Bildung der gewünschten CT-Komplexe nicht negativ beeinflusst.

Das erfindungsgemässe Verfahren wird vorteilhaft bei erhöhten Temperaturen durchgeführt, zum Beispiel bei 30 bis 200°C, bevorzugt bei 50 bis 100°C.

Geeignete Lösungsmittel sind zum Beispiel unpolare, polare und aprotische Lösungsmittel, die alleine oder

in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin) substituierte Benzole (Benzonitril, Chlorbenzol, o-Dichlorbenzol, 1,2,4-Trichlorbenzol, Nitrobenzol, Toluol, Xylol), Nitrile (Acetonitril, Propionitril) und aliphatische oder cycloaliphatische Kohlenwasserstoffe (Petrolether, Pentan, Hexan, Cyclohexan und Methylcyclohexan). Geeignet sind auch aromatisch-aliphatische Ether wie zum Beispiel Methyl- oder Ethylphenylether.

Die nach dem erfindungsgemässen Verfahren erhältlichen CT-Komplexe fallen in hohen Reinheiten an und brauchen nach der Filtration nur noch mit Lösungsmitten gewaschen werden. Es handelt sich in der Regel um schwarze Kristalle mit nadelförmiger Kristallgestalt, die elektrische Leitfähigkeiten von mehr als 0,1 S/cm aufweisen. Sie eignen sich hervorragend als elektrische Leiter. So können mit der Einarbeitung dieser CT-Komplexe in Kunststoffe je nach Art des CT-Komplexes und der verwendeten Menge elektrisch leitende oder antistatisch ausgerüstete Kunststoffe erhalten werden, wobei der CT-Komplex als Netzwerk der Kristallnadeln in der Kunststoffmatrix vorliegt. Je nach der Konzentration des CT-Komplexes in der Kunststoffmatrix können sehr feinmaschige Nadelnetzwerke erhalten werden.

Ein weiterer Gegenstand der Erfindung ist eine Zusammensetzung, enthaltend a) ein duroplastisches, thermoplastisches oder strukturell vernetztes Polymer und b) einen CT-Komplex der Formel I in Form eines Netzwerks aus Kristallnadeln in der Polymermatrix.

Die CT-Komplexe können in einer Menge von 0,01 bis 30 Gew.-%, bevorzugt 0,01 bis 20 Gew.-%, besonders bevorzugt 0,01 bis 10 Gew.-% und insbesondere bevorzugt 0,1 bis 5 Gew.-% enthalten sein, bezogen auf die Zusammensetzung.

Bei den thermoplastischen Polymeren kann es sich zum Beispiel um die folgenden Polymeren, Copolymeren bzw. Mischungen von diesen Polymeren handeln:

1. Polymere von Mono- und Diolefinen, beispielsweise Polypropylen, Polyisobutylen, Polybuten- 1, Polymethylpenten- 1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten- 1-Copolymere, Propylen-Isobutylen-Copolymere, Ethylen-Buten- 1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B Klebrigmacherharze).

4. Polystyrol, Poly-(p-methylstyrol), Poly-(α-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat -Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethem.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylylendiamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen -isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly- 1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Polyether aus Diglycidylverbindungen, zum Beispiel Diglycidylethern und Diolen, z. B. aus Bisphenol-A-Diglycidylether und Bisphenol-A.

21. Natürliche Polymere, wie Cellulose, Naturkautschk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

22. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Bevorzugte Thermoplaste sind Polyolefine, Polystyrol, Polyvinylchlorid, Polyvinylidenchlorid, Polyvinylidenfluorid, Polyacrylate, Polymethacrylate, Polyamide, Polyester, Polycarbonate, aromatische Polysulfone, aromatische Polyether, aromatische Polyethersulfone, Polyimide und Polyvinylcarbazol.

Bei den Duroplasten und strukturell vernetzten Polymeren kann es sich zum Beispiel um folgende Polymere handeln:

1. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

2. Trocknende und nicht-trocknende Alkydharze.

3. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

4. Vernetzbare Acrylharze, die sich von substituierten Acrylsäureestern ableiten, wie z.B. von Epoxyacrylaten, Urethan-acrylaten oder Polyester-acrylaten.

5. Alkydharze, Polyesterharze und Acrylatharze, die mit Melaminharzen, Harnstoffharzen, Polyisocyanaten oder Epoxidharzen vernetzt sind.

6. Kautschuk auf der Basis von vernetzten Polydienen, zum Beispiel Butadien oder Isopren; Silikonkautschuk.

7. Epoxidharze, die sich von Polyepoxiden ableiten, z.B. von Bisglycidylethem von Polyolen oder von cycloaliphatischen Diepoxiden, und die gegebenenfalls einen Härter als Vernetzungsmittel enthalten, oder die unter Verwendung von Härtungsbeschleunigern thermisch oder durch Einwirkung von Strahlung vernetzt sind.

Unter den vernetzten Polymeren sind vernetzte Epoxidharze bevorzugt, denen als Polyepoxide bevorzugt Glycidylverbindungen mit durchschnittlich zwei Epoxidgruppen im Molekül zu Grunde liegen. Als Glycidylverbindungen kommen vor allem solche mit zwei an ein Heteroatom (z.B. Schwefel, vorzugsweise Sauerstoff oder Stickstoff) gebundenen Glycidylgruppen, β-Methylglycidylgruppen oder 2,3-Epoxycyclopentylgruppen in Frage; genannt seien insbesondere Bis-(2,3-epoxycyclopentyl)-ether, Diglycidylether von mehrwertigen aliphatischen Alkoholen, wie 1,4-Butandiol, oder Polyalkylenglykolen, wie Polypropylenglykole; Diglycidylether von cycloaliphatischen Polyolen, wie 2,2-Bis-(4-hydroxycyclohexyl)-propan; Diglycidylether von mehrwertigen Phenolen, wie Resorcin, Bis-(p-hydroxyphenyl)-methan, 2,2-Bis-(p-hydroxyphenyl)-propan (=Diomethan), 2,2-Bis-(4'-hydroxy-3',5'-dibromphenyl)-propan, 1,3-Di-(p-hydroxyphenyl)-ethan; Di- (β-methylglycidyl)-ether der oben angeführten zweiwertigen Alkohole oder zweiwertigen Phenole; Diglycidylester von Dicarbonsäuren, wie Phthalsäure, Terephthalsäure, Δ4-Tetrahydrophthalsäure und Hexahydrophthalsäure; N,N-Diglycidylderivate von primären Aminen und Amiden und heterocyclischen, zwei N-Atome enthaltenden Stickstoffbasen, und N,N'-Diglycidylderivate von disekundären Diamiden und Diaminen, wie N,N-Diglycidylanilin, N,N-Diglycidyltoluidin, N,N-Diglycidyl-p-aminophenyl-methyl-ether, N,N'-Dimethyl-N,N'-diglycidyl-bis-(p-aminophenyl)-methan; N',N''-Diglycidyl-N-phenyl-isocyanurat; N,N'-Diglycidylethylenharnstoff; N,N'-Diglycidyl-5,5-dimethyl-hydantoin, N,N'-Diglycidyl-5-isopropyl-hydantoin, N,N-Methylen-bis-(N',N'-diglycidyl-5,5-dimethylhydantoin), 1,3-Bis-(N-glycidyl-5,5-dimethylhydantoin)-2-hydroxypropan; N,N'-Diglycidyl-5,5-dimethyl-6-isopropyl-5,6-dihydro-uracil, Triglycidylisocyanurat.

Eine bevorzugte Gruppe von Epoxidharzen sind glycidylierte Novolake, Hydantoine, Aminophenole, Bisphenole und aromatische Diamine oder cycloaliphatische Epoxidverbindungen. Besonders bevorzugte Epoxidharze sind glycidylierte Kresolnovolake, Bisphenol-A- und Bisphenol-F-diglycidylether, Hydantoin-N,N'-bisglycid, p-Aminophenoltriglycid, Diaminodiphenylmethantetraglycid, Vinylcyclohexendioxid, 3,4-Epoxycyclohexylmethyl-3,4-epoxycyclohexancarboxylat oder Mischungen hiervon.

Geeignet sind auch vorreagierte Addukte solcher Epoxidverbindungen mit Epoxidhärtern, zum Beispiel ein Addukt aus Bisphenol-A-diglycidylether und Bisphenol-A, oder mit Oligoestern mit zwei terminalen Carboxylgruppen und Epoxiden vorreagierte Addukte.

Als Härter für Epoxidharze kommen saure oder basische Verbindungen in Frage. Als geeignete Härter seien zum Beispiel genannt: mehrwertige Phenole (Resorcin, 2,2-Bis-(4-hydroxyphenyl)-propan) oder Phenol-Formaldehyd-Harze; mehrbasische Carbonsäuren und ihre Anhydride, z. B. Phthalsäureanhydrid, Tetrahydrophthalsäureanhydrid, Hexahydrophthalsäureanhydrid, 4-Methylhexahydrophthalsäureanhydrid, 3,6-Endomethylen-tetrahydrophthalsäreanhydrid, 4-Methyl-3,6-endomethylen-tetrahydrophthalsäureanhydrid (Methylnadicanhydrid), 3,4,5,6,7,7-Hexachlor-endomethylen-tetrahydrophthalsäureanhydrid, Bernsteinsäureanhydrid, Adipinsäureanhydrid, Trimethyladipinsäureanhydrid, Sebacinsäureanhydrid, Maleinsäureanhydrid, Dodecylbernsteinsäureanhydrid, Pyromellitsäuredianhydrid, Trimellitsäureanhydrid, Benzophenontetracarbonsäuredianhydrid, oder Gemische solcher Anhydride.

Eine bevorzugte Gruppe von Härtern sind Novolake und Polycarbonsäureanhydride.

Die Epoxidharze können auch zusätzlich mit Härtungsbeschleunigem oder nur mit thermischen Härtungskatalysatoren gehärtet werden. Beispiele sind 3-Ethyl-4-methylimidazol, Triamylammoniumphenolat); Mono- oder Polyphenole (Phenol, Diomenthan, Salicylsäure); Bortrifluorid und seine Komplexe mit organischen Verbindungen wie z. B. Bortrifluorid-Etherkomplexe und BortrifluoridAmin-Komplexe ($BF_3$-Monoethylamin-Komplex); Phosphorsäure und Triphenylphosphit.

Härtungsbeschleuniger und Katalysatoren werden üblicherweise in einer Menge von 0,1 bis 10 Gew.-% zugegeben, bezogen auf das Epoxidharz. Härter für Epoxidharze werden im allgemeinen in äquimolaren Mengen verwendet, bezogen auf die Epoxidgruppen und funktionellen Gruppen eines Härters.

Der erfindungsgemässen Zusammensetzung können weitere Additive zur Verbesserung der Verarbeitungseigenschaften, der mechanischen, elektrischen und thermischen Eigenschaften, der Oberflächeneigenschaften und der Lichtstabilität einverleibt sein, zum Beispiel feinteilige Füllstoffe, Verstärkerfüllstoffe, Weichmacher, Gleit- und Entformungsmittel, Haftvermittler, Antistatika, Antioxidantien, Wärme- und Lichtstabilisatoren, Pigmente und Farbstoffe.

Eine bevorzugte Ausführungsform der erfindungsgemässen Zusammensetzung ist dadurch gekennzeichnet, dass sie als Formkörper, Filme, Folien, Fasern, oder als Beschichtungen auf mindestens einer Oberfläche eines Substrats ausgebildet ist.

Ein weiterer Gegenstand der Erfindung ist ein Verfahren zur Herstellung von erfindungsgemässen Zusammensetzungen, das dadurch gekennzeichnet ist, dass man (a) einen CT-Komplex der Formel I einem thermoplastischen Kunststoff einverleibt, (b) einen CT-Komplex der Formel I mindestens einer Komponente eines duroplastischen oder strukturell vernetzbaren Kunststoffs einverleibt und dann die Mischung gegebenenfalls zusammen mit weiteren Komponenten zu einem duroplastischen oder strukturell vernetzten Kunststoff polymerisiert, oder (c) eine Verbindung der Formel II oder ein Ferrocenderivat B zusammen mit einem thermoplastischen Kunststoff oder mindestens einer Komponente eines duroplastischen oder strukturell vernetzbaren Kunststoffs in einem organischen Lösungsmittel löst, diese Lösung gegebenenfalls zusammen mit weiteren Komponenten für einen duroplastischen oder strukturell vernetzbaren Kunststoff mit einer Lösung eines Ferrocenderivats B beziehungsweise einer Verbindung der Formel II vermischt, das Lösungsmittel entfernt und härtbare Mischungen zu einem duroplastischen oder strukturell vernetzten Kunststoff polymerisiert. Das Herstellungsverfahren kann mit einer Formgebung verbunden sein.

Die Herstellung der erfindungsgemässen Zusammensetzung kann nach in der Kunststofftechnik bekannten Verfahren erfolgen. Bei Formgebungsverfahren für Polymere, zum Beispiel Giessen, Pressverfahren, Spritzgiessen und Extrusion, kann der CT-Komplex selbst unter Bildung von Suspensionen einem Termoplasten oder mindestens einem Ausgangsstoff für Duroplaste, oder getrennt je einem Ausgangsstoff (zum Beispiel dem Epoxidharz und dem Härter) unter Bildung von Lösungen oder Suspensionen zugegeben werden, wobei nach der Formgebung der CT-Komplex während des Abkühlens in Form von Nadeln auskristallisiert beziehungsweise ausfällt, und die Nadeln ein Netzwerk in einer Polymermatrix bilden.

In einer besonders bevorzugten Ausführungsform ist die erfindungsgemässe Zusammensetzung als Film oder Folie oder als Beschichtung auf mindestens einer Oberfläche eines Substrats ausgebildet. Zur Herstellung solcher Ausführungsformen wird zum Beispiel ein thermoplastisches Polymer oder mindestens ein Ausgangsprodukt für einen Duroplasten oder ein strukturell vernetztes Polymer in einem inerten Lösungsmittel zusammen mit einem CT-Komplex der Formel I suspendiert und /oder gelöst, oder zusammen mit einer Verbindung der Formel II oder einem Ferrocenderivat B gelöst und dann mit einer Lösung des Ferrocenderivats B beziehungsweise einer Verbindung der Formel II versetzt und vermischt, danach mittels bekannter Beschichtungstechniken auf ein gegebenenfalls vorerwärmtes Substrat aufgetragen und dann unter Erwärmen das Lösungsmittel entfernt, wobei vernetzbare Mischungen dann noch ausgehärtet werden können. Freitragende Filme und Folien werden durch Ablösen vom Substrat oder mittels Extrusionsverfahren erhalten.

Geeignete Substrate sind zum Beispiel Glas, Metalle, Kunststoffe, mineralische und keramische Werkstoffe, Holz und Papier. Die Substrate können beliebige äussere Formen aufweisen; es kann sich zum Beispiel um Formkörper, Fäden, Fasern, Gewebe, Stangen, Rohre, Bänder, Folien, Platten, Walzen oder Gehäuse handeln.

Geeignete Beschichtungsverfahren sind zum Beispiel Streichen, Walzen, Rakeln, Giessen, Schleudergiessen, Vorhanggiessen und Sprayen. Besonders bevorzugte Verfahren sind Sprayverfahren, weil zum einen sehr dünne und gleichmässige Schichten mit im wesentlichen isotropen, sehr feinmaschigen und homogenen Netzwerken aus Kristallnadeln der CT-Komplexen erhältlich sind, und zum anderen die Grösse der Kristallnadeln und die Maschenweite der Netzwerke durch die Tröpfchengrösse kontrolliert werden kann, selbst wenn man Suspensionen sprüht.

Geeignete inerte Lösungsmittel für Polymere beziehungsweise Ausgangsprodukte für Polymere sind zum Beispiel polare und bevorzugt aprotische Lösungsmittel, die alleine oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin) substituierte Benzole (Benzonitril, Chlorbenzol, o-Dichlorbenzol, 1,2,4-Trichlorbenzol, Nitrobenzol, Toluol, Xylol) und Nitrile (Acetonitril, Propionitril). Geeignet sind auch aromatisch-aliphatische Ether wie zum Beispiel Methyl- oder Ethylphenylether. Geeignete Lösungsmittel für die Verbindungen der Formel II und die Ferrocenderivate B sind zuvor genannt worden.

Die Beschichtungsverfahren können zum Beispiel so durchgeführt werden, dass man die einzelnen Bestandteile getrennt löst und erst vor dem gewählten Beschichtungsverfahren vereinigt. Man kann aber auch die Bestandteile in zwei Lösungen, zum Beispiel Polymerlösung und Ferrocenderivat B oder einer Verbindung der Formel II und Lösung einer Verbindung der Formel II oder eines Ferrocenderivats B gegebenenfalls zusammen mit einem Polymer herstellen, oder alle Bestandteile in einer Lösung vereinigen. Im letzten Fall können die CT-Komplexe schon vor der Beschichtung auskristallisieren, was aber praktisch keinen Einfluss auf die gewünschte Qualität der Beschichtung hat.

Die Lösungen werden zweckmässig erwärmt, zum Beispiel auf 30 bis 200 °C. Es ist vorteilhaft, auch das Substrat zu erwärmen, um die Entfernung des Lösungsmittels zu beschleunigen, die im allgemeinen bei Temperaturen von 50 bis 150 °C, bevorzugt 50 bis 100 °C vorgenommen wird, bis die Beschichtung trocken ist. Sofern die Beschichtungen zu frei tragenden Filmen oder Folien abgelöst werden sollen, kann das Substrat vor der Beschichtung mit Antihaftmitteln behandelt werden.

In einer Herstellvariante für Beschichtungen kann man auch die erfindungsgemässen CT-Komplexe, die als Kristallnadeln ausgebildet sind, in einer Lösung eines Polymeren oder Ausgangsstoffen für Duroplaste suspendieren, dann ein Substrat beschichten und danach das Lösungsmittel entfernen und gegebenenfalls zur Bildung der Duroplaste aushärten. Ferner ist es möglich, pulvrige Trockenmischungen aus Polymerpulvern oder festen Ausgangsstoffen für Duroplaste und den CT-Komplexen herzustellen und diese in gegebenenfalls elektrostatischen Beschichtungsverfahren zu Schichten auf Substraten zu verarbeiten. Auch bei diesen Varianten werden Netzwerke von Kristallnadeln in einer Polymermatrix erhalten.

Es ist auch möglich, reine Schichten von Netzwerken aus Kristallnadeln der CT-Komplexe auf einem Substrat herzustellen, indem man zum Beispiel Lösungen oder Suspensionen der CT-Komplexe in einem Lösungsmittel auf einem Substrat aufbringt und danach das Lösungsmittel verdampft. Solche Schichten können zur Erhöhung der elektrischen Leitfähigkeit elektrochemisch metallisiert werden, zum Beispiel mit Cu, Pt oder Pd. Es kann zweckmässig sein, solche reine Schichten mit einer Schutzschicht aus einem Polymer zu beschichten oder die reinen Schichten nachträglich mit einem Polymer zu umhüllen.

Die Schichtdicken können in einem breiten Rahmen variieren, je nach Wahl des Beschichtungsverfahrens. Mit Sprayverfahren können sehr dünne Schichten erhalten werden, während man mit Streich- und Giessverfahren auch dicke Schichten erzielen kann. Die Schichtdicken können zum Beispiel 0,01 bis 5000 µm, bevorzugt 0,1 bis 1000 µm und besonders bevorzugt 0,1 bis 500 µm betragen.

Die erfindungsgemässe Zusammensetzung ist je nach Wahl des Polymers opak oder transparent und sie weist hervorragende elektrische Eigenschaften auf. So weisen die Beschichtungen und Formkörper überraschend eine ausgezeichnete Entladungsfähigkeit auf, die für heterogene Materialien sonst schwierig oder gar nicht zu erreichen ist. Die Zusammensetzung eignet sich daher besonders zur Verwendung als antistatisch ausgerüstete Formteile für die elektrostatische Abschirmung von Bauteilen oder zur Verwendung als antistatisch ausgerüstete Formkörper. Die hohen elektrischen Leitfähigkeiten ermöglichen ferner die Verwendung als elektrische Leiter, zum Beispiel als Elektroden für Displayelemente oder elektronische Bauteile sowie als Ladungsspeicher in Kondensatoren. Die Zusammensetzungen weisen auch hervorragende mechanische Festigkeiten und mechanische Gebrauchseigenschaften auf. Die Zusammensetzungen können auch bei vergleichsweise niedrigen Temperaturen hergestellt werden und bieten zudem den Vorteil, keine oder nur eine unwesentliche Korrosion bei metallischen Maschinenteilen zu verursachen. Ferner weisen sie gute Stabilitäten gegenüber dem Einfluss von Wärme und/oder Feuchtigkeit auf.

Weitere Gegenstände der Erfindung sind die Verwendung der erfindungsgemässen Charge-Transfer Komplexe der Formel I als elektrische Leiter, die Verwendung der erfindungsgemässen Zusammensetzung als antistatisch ausgerüstete Formteile für die elektrostatische Abschirmung von Bauteilen oder als antistatisch ausgerüstete Formkörper; die Verwendung der erfindungsgemässen Zusammensetzung als elektrische Leiter, die Verwendung der erfindungsgemässen Zusammensetzung als Elektrodenmaterial und die Verwendung der erfindungsgemässen Zusammensetzung in Form von Filmen oder Folien als Ladungsträger in Kondensatoren.

Die nachfolgenden Beispiele erläutern die Erfindung näher.

A) Herstellungsbeispiele

Beispiel A1: Herstellung eines CT-Komplexes aus Dimethylferrocen und 5,7,12,14-Tetracyanoiminpentacen.

Zu einer 70 °C warmen Lösung von 64 mg (0,3 mMol) Dimethylferrocen in 8 ml γ-Butyrolacton wird eine gleich warme Lösung von 261 mg (0,6 mMol) 5,7,12,14-Tetracyanoimintetracen in 90 ml γ-Butyrolacton gegeben. Man erhält eine grüne Lösung, die man 72 Stunden bei Raumtemperatur stehen lässt. Danach werden die ausgefallenen schwarzen Kristallnadeln abfiltriert, mit Hexan gewaschen und dann im Hochvakuum getrocknet.

Man erhält 60 mg (18 %) der Titelverbindung, deren elektrische Leitfähigkeit (gemessen nach der Vierpunktmethode an einem Pressling) 2,0 S/cm beträgt. Elementaranalyse gefunden (berechnet): C 70,94 (70,98); H 3,26 (3,16); N 20,42 (20,69); Fe 5,14 (5,16).

Beispiel A2: Herstellung eines CT-Komplexes aus Hexamethylferrocen und 5,7,12,14-Tetracyanoiminpentacen.

Zu einer 80 °C warmen Lösung von 374 mg (1,385 mMol) Hexamethylferrocen in 40 ml 1,2-Dichlorethan wird eine gleich warme Lösung von 1,203 g (2,769 mMol) 5,7,12,14-Tetracyanoimintetracen in 500 ml 1,2-Dichlorethan gegeben. Man erhält eine grüne Lösung, aus der sofort schwarze Nadeln auskristallisieren. Die Lösung wird zunächst auf Raumtemperatur und dann auf -5°C abgekühlt. Der Niederschlag wird abfiltriert, mit $CH_2Cl_2$ gewaschen, und dann im Hochvakuum Vakuum getrocknet. Man erhält die Titelverbindung in einer Ausbeute von 1,24 g (78%). Die elektrische Leitfähigkeit (Pressling) beträgt 5,0 S/cm. Elementaranalyse gefunden (berechnet): C 71,05 (71,71); H 3,85 (3,72); N 19,88 (19,68); Fe 4,63 (4,90). Zersetzungstemperatur 217 °C.

Beispiel A3: Herstellung eines CT-Komplexes aus Octamethylferrocen und 5,7,12,14-Tetracyanoiminpentacen.

Zu einer 80 °C warmen Lösung von 200 mg (0,460 mMol) 5,7,12,14-Tetracyanoiminpentacen in 150 ml 1,2-Dichlorethan wird eine gleich warme Lösung von 69 mg (0,230 mMol) Octamethylferrocen in 250 ml 1,2-Dichlorethan gegeben. Man erhält eine grüne Lösung, aus der sofort schwarze Nadeln auskristallisieren. Die Lösung wird zunächst auf Raumtemperatur und dann auf -5°C abgekühlt. Der Niederschlag wird abfiltriert, mit $CH_2Cl_2$ gewaschen, und dann im Hochvakuum Vakuum getrocknet. Man erhält die Titelverbindung in einer Ausbeute von 175 mg (65%). Die elektrische Leitfähigkeit (Pressling) beträgt 3,0 S/cm. Elementaranalyse gefunden (berechnet): C 71,48 (72,04); H 4,03 (3,97); N 18,76 (19,20); Fe 4,74 (4,78). Zersetzungstemperatur 242 °C.

Beispiel A4: Herstellung eines CT-Komplexes aus Decamethylferrocen und 5,7,12,14-Tetracyanoiminpentacen.

Zu einer 80 °C warmen Lösung von 56 mg (0,173 mMol) Decamethylferrocen in 250 ml 1,2-Dichlorethan wird eine gleich warme Lösung von 150 mg (0,345 mMol) 5,7,12,14-Tetracyanoiminpentacen in 350 ml 1,2-Dichlorethan gegeben. Man erhält eine grüne Lösung, aus der sofort schwarze Nadeln auskristallisieren. Die Lösung wird zunächst auf Raumtemperatur und dann auf -5°C abgekühlt. Der Niederschlag wird abfiltriert, mit $CH_2Cl_2$ gewaschen, und dann im Hochvakuum Vakuum getrocknet. Man erhält die Titelverbindung in einer Ausbeute von 126 mg (61%). Die elektrische Leitfähigkeit (Pressling) beträgt 1,0 S/cm. Elementaranalyse gefunden (berechnet): C 71,81 (72,36); H 4,35 (4,22); N 18,15 (18,75); Fe 4,67 (4,88). Zersetzungstemperatur 243 °C.

Beispiel A5: Herstellung eines CT-Komplexes aus Decamethylferrocen und 5,7,12,14-Tetracyanoiminpentacen, 5,7,14-Triacyanoimin-12-oxo-pentacen und 7, 14-Dicyanoimin-5, 12-dioxo-pentacen.

Zu einer 85 °C warmen Lösung von 113 mg Decamethylferrocen in 25 ml 1,2-Dichlorethan wird eine gleich warme Lösung von 300 mg einer Mischung aus 5,7,12,14-Tetracyanoiminpentacen, 5,7,14-Triacyanoimin-12-oxo-pentacen und 7,14-Dicyanoimin-5,12-dioxo-pentacen in 70 ml 1,2-Dichlorethan gegeben. Aus der dunkelroten Lösung kristallisieren sofort schwarze feine Kristallnadeln aus. Man lässt einige Stunden bei Raumtemperatur stehen, filtriert den Niederschlag ab, wäscht diesen mit $CH_2Cl_2$ und trocknet ihn danach im Hochvakuum. Ein Pressling des CT-Komplexes weist eine elektrische Leitfäkigkeit von 0,52 S/cm auf.

Beispiel A6: Herstellung eines CT-Komplexes aus Tetramethylferrocen und 5,7,12, 14-Tetracyanoiminpentacen.

Zu einer 80 °C warmen Lösung von 70 mg Tetramethylferrocen in 70 ml 1,2-Dichlorethan wird eine gleich warme Lösung von 251 mg 5,7, 12, 14-Tetracyanoiminpentacen in 300 ml 1,2-Dichlorethan gegeben. Die erhaltene Lösung wird filtriert und das Volumen auf 50 ml eingeengt. Es bilden sich grüne Nadeln, die abfiltiert, mit Methylenchlorid gewaschen und dann getrocknet werden. Man erhält 110 mg (34%) der Titelverbindung mit einer elektrischen Leitfähigkeit von 1,42 S/cm (gemessen an einem Pressling).

B) Anwendungsbeispiele

Beispiel B1:

Zu einer 70 °C warmen Lösung von 100 mg Polycarbonat und 1,5 mg Octamethylferrocen in 8 ml 1,2-Dichlorethan wird eine 70 °C warme Lösung von 4 mg 5,7,12,14-Tetracyanoiminpentacen in 3 ml 1,2-Dichlorethan zugegeben. Aliquote Teile werden auf eine Glasplatte gegossen und dann das Lösungsmittel bei verschiedenen Temperaturen abgedampft. An den erhaltenen Folien wird anschliessend die Leitfähigkeiten gemessen.

| Abdampftemperatur (°C) | Leitfähigkeit (S/cm) |
|---|---|
| 40 | 1,2 |
| 45 | 1,0 |
| 50 | 1,0 |

Stabilität: Die Folien werden 300 Stunden bei Raumtemperatur in Wasser gelagert und danach die elektrische Leitfähigkeit bestimmt. Diese ist noch so hoch, dass eine Verwendung für antistatische Abschirmungen möglich ist.

Beispiel B2:

Zu einer 70 °C warmen Lösung von 100 mg Polycarbonat und 1,5 mg Hexamethylferrocen in 8 ml 1,2-Dichlorethan wird eine 70 °C warme Lösung von 4 mg 5,7,12,14-Tetracyanoiminpentacen in 3 ml 1,2-Dichlorethan zugegeben. Aliquote Teile werden auf eine Glasplatte gegossen und dann das Lösungsmittel bei verschiedenen Temperaturen abgedampft. An den erhaltenen Folien wird anschliessend die Leitfähigkeit gemessen.

| Abdampftemperatur (°C) | Leitfähigkeit (S/cm) |
|---|---|
| 40 | 1,1 |
| 45 | 1,0 |
| 50 | 0,4 |

Stabilität: Die Folien werden 300 Stunden bei Raumtemperatur in Wasser gelagert und danach die elektrische Leitfähigkeit bestimmt. Diese ist noch so hoch, dass eine Verwendung für antistatische Abschirmungen möglich ist.

Beispiel B3:

Zu einer 70 °C warmen Lösung von 100 mg Polycarbonat und 1,5 mg Decamethylferrocen in 8 ml 1,2-Dichlorethan wird eine 70 °C warme Lösung von 4 mg einer Mischung aus 5,7,12,14-Tetracyanoiminpentacen 5,7,14-Tricyanoimin-12-oxo-pentacen und 7,14-Dicyanoimin-5, 12-dioxo-pentacen in 3 ml 1,2-Dichlorethan zugegeben. Aliquote Teile werden auf eine Glasplatte gegossen und dann das Lösungsmittel bei verschiedenen

Temperaturen abgedampft. An den erhaltenen Folien wird anschliessend die Leitfähigkeiten gemessen.

| Abdampftemperatur (°C) | Leitfähigkeit (S/cm) |
|---|---|
| 30 | $1{,}6 \cdot 10^{-2}$ |
| 40 | $4{,}5 \cdot 10^{-2}$ |
| 45 | $5{,}5 \cdot 10^{-2}$ |
| 50 | $3{,}5 \cdot 10^{-2}$ |
| 60 | $2{,}0 \cdot 10^{-2}$ |

Die Folien werden 500 Stunden bei 85 °C und 85 % Luftfeuchtigkeit gelagert und weisen danach immer noch eine Leitfähigkeit auf, die eine Verwendung zur antistatischen Abschirmung ermöglicht.

Beispiel B4:

Es wird bei 80 °C eine Lösung aus 5,7 mg des Komplexes gemäss Beispiel A2 und 100 mg Polycarbonat in 14 ml Anisol hergestellt, auf eine Glasplatte gegossen und das Lösungsmittel bei 100 °C verdampft. Der erhaltene Film weist eine elektrische Leitfähigkeit von 9x $10^{-2}$ S/cm auf.

Beispiel B5:

Zu einer 80 °C warmen Lösung von 100 mg Polystyrol und 2,7 mg Hexamethylferrocen in 8 ml Toluol wird eine 80 °C warme Lösung von 8,7 mg 5,7,12,14-Tetracyanoiminpentacen in 3 ml Toluol zugegeben. Die Lösung wird auf eine Glasplatte gegossen und dann das Lösungsmittel bei 80 °C abgedampft. An der erhaltenen Folie wird anschliessend eine Leitfähigkeiten von 4,1x$10^{-2}$ S/cm gemessen.

Beispiel B6:

Zu einer 40 °C warmen Lösung von 100 mg Polycarbonat und 1,3 mg Hexamethylferrocen in 18 ml Methylenchlorid wird eine 40 °C warme Lösung von 4,3 mg 5,7, 12, 14-Tetracyanoiminpentacen in 10 ml Methylenchlorid zugegeben. Die Lösung wird auf eine Glasplatte gegossen und dann das Lösungsmittel bei 40 °C abgedampft. An der erhaltenen Folie wird anschliessend eine Leitfähigkeiten von 1,2 S/cm gemessen.

Beispiel B7:

Zu einer 70 °C warmen Lösung von 200 mg Polysulfon und 1,5 mg Octamethylferrocen in 10 ml Dimethylformamid wird eine 70 °C warme Lösung von 4,5 mg 5,7,12,14-Tetracyanoiminpentacen in 4 ml Dimethylformamid zugegeben. Die Lösung wird auf eine Glasplatte gegossen und dann das Lösungsmittel bei 70 °C abgedampft. An der erhaltenen Folie wird anschliessend eine Leitfähigkeiten von 9,3x $10^{-2}$ S/cm gemessen.

Beispiel B8:

Zu einer 45 °C warmen Lösung von 100 mg Polycarbonat und 1,5 mg Decamethylferrocen in 7 ml 1,2-Dichlorethan wird eine 45 °C warme Lösung von 4 mg 5,7,12,14-Tetracyanoiminpentacen in 4 ml 1,2-Dichlorethan zugegeben. Die Lösung wird auf eine Glasplatte gegossen und dann das Lösungsmittel bei 45 °C abgedampft. An der erhaltenen Folie wird anschliessend eine Leitfähigkeiten von 5,4x $10^{-2}$ S/cm gemessen.

## Patentansprüche

1. Charge-Transfer Komplexe der Formel I

$$[A]_2^{\ominus} B^{\oplus} \qquad (I),$$

worin

a) A eine Verbindung der Formel II oder eine Mischung von Verbindungen der Formel II ist,

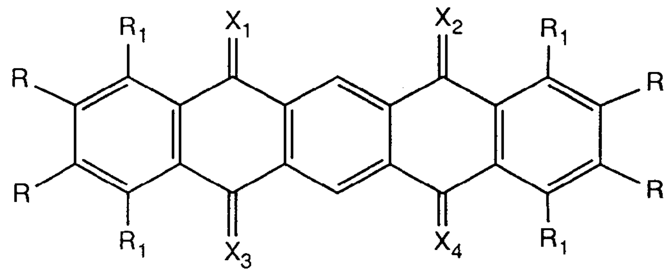

(II),

worin die R gleich sind und für H oder $C_1$-$C_4$-Alkyl stehen, oder die benachbarten R zusammen $-(CH_2)_3-$ oder $-(CH_2)_4-$ darstellen; $R_1$ H oder $C_1$-$C_4$-Alkyl bedeutet; und $X_1$ =N-CN darstellt und $X_2$, $X_3$ und $X_4$ =O oder =N-CN bedeuten, und

b) B ein Ferrocen- oder Indenylderivat ist, dessen Reduktionspotential $E_{1/2}$ < 0,41 V ist, bezogen auf die Standardkalomelelektrode.

2. Komplexe gemäss Anspruch 1, dadurch gekennzeichnet, dass R $C_1$-$C_4$-Alkyl bedeutet und $R_1$ für H steht.

3. Komplexe gemäss Anspruch 1, dadurch gekennzeichnet, dass $R_1$ $C_1$-$C_4$-Alkyl bedeutet und R für H steht.

4. Komplexe gemäss Anspruch 1, dadurch gekennzeichnet, dass R und $R_1$ in der Bedeutung von Alkyl für Methyl oder Ethyl stehen.

5. Komplexe gemäss Anspruch 1, dadurch gekennzeichnet, dass R und $R_1$ für H, Methyl oder Ethyl stehen.

6. Komplexe gemäss Anspruch 1, dadurch gekennzeichnet, dass R und $R_1$ für H stehen.

7. Komplexe gemäss Anspruch 1, dadurch gekennzeichnet, dass $X_1$ und $X_4$ =N-CN und $X_2$ und $X_3$ =O oder =N-CN, oder $X_2$ und $X_3$ =N-CN und $X_1$ und $X_4$ =O oder =N-CN.

8. Komplexe gemäss Anspruch 1, dadurch gekennzeichnet, dass $X_1$, $X_2$, $X_3$ und $X_4$ =N-CN darstellen.

9. Komplexe gemäss Anspruch 1, dadurch gekennzeichnet, dass das Reduktionspotential des Ferrocenylderivats B kleiner oder gleich 0,32 V beträgt.

10. Komplexe gemäss Anspruch 1, dadurch gekennzeichnet, dass es sich bei dem Ferrocenylderivat B um eine Verbindung der Formel $Fe[R_2]_2$ handelt, worin $R_2$ für Cyclopentadienyl oder Indenyl steht, die 1 bis 5 beziehungsweise 1 bis 7 Substituenten aus der Gruppe $C_1$-$C_6$-Alkyl, $C_1$-$C_6$-Alkoxy, $C_1$-$C_6$-Hydroxyalkyl, -Amino-$C_1$-$C_6$-alkyl, Primär- oder Sekundäramino-$C_1$-$C_6$-alkyl mit 1 bis 12 C-Atomen in der Primäraminogruppe und 2 bis 12 C-Atomen in der Sekundäraminogruppe, $NH_2$, Primäramino mit 1 bis 12 C-Atomen, oder Sekundäramino mit 2 bis 12 C-Atomen enthalten.

11. Komplexe gemäss Anspruch 10, dadurch gekennzeichnet, dass $R_2$ für Cyclopentadienyl oder Indenyl steht, die 1 bis 5 beziehungsweise 1 bis 7 Substituenten aus der Gruppe $C_1$-$C_4$-Alkyl, $C_1$-$C_4$-Alkoxy, $C_1$-$C_4$-Hydroxyalkyl, -Amino-$C_1$-$C_4$-alkyl, Primär- oder Sekundäramino-$C_1$-$C_4$-alkyl mit 1 bis 6 C-Atomen in der Primäraminogruppe und 2 bis 6 C-Atomen in der Sekundäraminogruppe, $NH_2$, Primäramino mit 1 bis 6 C-Atomen, oder Sekundäramino mit 2 bis 6 C-Atomen enthalten.

12. Komplexe gemäss Anspruch 10, dadurch gekennzeichnet, dass $R_2$ für Cyclopentadienyl oder Indenyl steht, die mit $C_1$-$C_4$-Alkyl substituiert sind.

13. Komplexe gemäss Anspruch 12, dadurch gekennzeichnet, dass das Alkyl Methyl ist.

14. Komplexe gemäss Anspruch 10, dadurch gekennzeichnet, dass das Ferrocenylderivat B Dimethyl-, Tetramethyl-, Hexamethyl-, Octamethyl- oder Decamethylferrocen ist.

15. Komplexe gemäss Anspruch 1, dadurch gekennzeichnet, dass in Formel I A für 5,7,12,14-Tetracyanoiminpetacen steht und B Dimethyl-, Tetramethyl-, Hexamethyl-, Octamethyl- oder Decamethylferrocen ist.

16. Verfahren zur Herstellung von Charge-Transfer Komplexen der Formel I gemäss Anspruch 1, dadurch gekennzeichnet, dass man äquimolare Mengen eines Ferrocenderivates B und eines Pentacencyanoimins der Formel II in einem inerten organischen Lösungsmittel umsetzt.

17. Zusammensetzung, enthaltend a) ein duroplastisches, thermoplastisches oder strukturell vernetztes Polymer und b) einen Charge-Transfer Komplex der Formel I gemäss Anspruch 1 in Form eines Netzwerks aus Kristallnadeln in der Polymermatrix.

18. Zusammensetzung gemäss Anspruch 17, dadurch gekennzeichnet, dass der Charge-Transfer Komplex in einer Menge von 0,01 bis 30 Gew.-% enthalten ist, bezogen auf die Zusammensetzung.

19. Zusammensetzung gemäss Anspruch 18, dadurch gekennzeichnet, dass der Charge-Transfer Komplex in einer Menge von 0,01 bis 10 Gew.-% enthalten ist.

20. Zusammensetzung gemäss Anspruch 17, dadurch gekennzeichnet, dass es sich bei dem thermoplastischen Polymer um Polyolefine, Polystyrol, Polyvinylchlorid, Polyvinylidenchlorid, Polyvinylidenfluorid, Polyacrylate, Polymethacrylate, Polyamide, Polyester, Polycarbonate, aromatische Polysulfone, aromatische Polyether, aromatische Polyethersulfone, Polyimide und Polyvinylcarbazol handelt.

21. Zusammensetzung gemäss Anspruch 17, dadurch gekennzeichnet, dass es sich bei dem duroplastischen Polymer um ein Epoxidharz handelt.

22. Zusammensetzung gemäss Anspruch 17, dadurch gekennzeichnet, dass sie als Formkörper, Filme, Folien, Fasern, oder als Beschichtungen auf mindestens einer Oberfläche eines Substrats ausgebildet ist.

23. Zusammensetzung gemäss Anspruch 22, dadurch gekennzeichnet, dass als Schicht auf einem Träger ausgebildet ist und die Schichtdicke der Beschichtungen 0,01 bis 5000 $\mu$m beträgt.

24. Zusammensetzung gemäss Anspruch 23, dadurch gekennzeichnet, dass die Schichtdikke der Beschichtungen 0,1 bis 1000 $\mu$m beträgt.

25. Verfahren zur Herstellung von Zusammensetzungen gemäss Anspruch 17, dadurch gekennzeichnet, dass man (a) einen CT-Komplex der Formel I einem thermoplastischen Kunststoff einverleibt, (b) einen CT-Komplex der Formel I mindestens einer Komponente eines duroplastischen oder strukturell vernetzbaren Kunststoffs einverleibt und dann die Mischung gegebenenfalls zusammen mit weiteren Komponenten zu einem duroplastischen oder strukturell vernetzten Kunststoff polymerisiert, oder (c) eine Verbindung der Formel II oder ein Ferrocenderivat B zusammen mit einem thermoplastischen Kunststoff oder mindestens einer Komponente eines duroplastischen oder strukturell vernetzbaren Kunststoffs in einem organischen Lösungsmittel löst, diese Lösung gegebenenfalls zusammen mit weiteren Komponenten für einen duroplastischen oder strukturell vernetzbaren Kunststoff mit einer Lösung eines Ferrocenderivats B beziehungsweise einer Verbindung der Formel II vermischt, das Lösungsmittel entfernt und härtbare Mischungen zu einem duroplastischen oder strukturell vernetzten Kunststoff polymerisiert.

26. Verfahren gemäss Anspruch 25, dadurch gekennzeichnet, dass es mit einer Formgebung verbunden ist.

27. Verwendung der Charge-Transfer Komplexe der Formel I gemäss Anspruch 1 als elektrische Leiter.

28. Verwendung der Zusammensetzung gemäss Anspruch 17 als antistatisch ausgerüstete Formteile für die elektrostatische Abschirmung von Bauteilen oder als antistatisch ausgerüstete Formkörper.

29. Verwendung der Zusammensetzung gemäss Anspruch 17 als elektrische Leiter.

30. Verwendung der Zusammensetzung gemäss Anspruch 17 als Elektrodenmaterial.

31. Verwendung der Zusammensetzung gemäss Anspruch 17 in Form von Filmen oder Folien als Ladungsträger in Kondensatoren.

Europäisches Patentamt

# EUROPÄISCHER RECHERCHENBERICHT

Nummer der Anmeldung
EP 93 81 0037

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | WO-A-9 111 432 (E.I. DU PONT DE NEMOURS AND COMPANY)<br>* Ansprüche 30-32 *<br>----- | 1 | C07F17/02<br>C08K5/00<br>C08J5/18<br>H01B1/12<br>H01J1/05 |
| | | | **RECHERCHIERTE SACHGEBIETE (Int. Cl.5 )** |
| | | | C07F<br>C08K<br>C08J<br>H01B<br>H01J |

Der vorliegende Recherchenbericht wurde für alle Patentansprüche erstellt

| Recherchenort | Abschlußdatum der Recherche | Prüfer |
|---|---|---|
| DEN HAAG | 16 APRIL 1993 | SIEMENS T. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)